# EUROPÄISCHE PATENTSCHRIFT

(11) **EP 2 790 871 B1**
(45) Veröffentlichungstag und Bekanntmachung des Hinweises auf die Patenterteilung: **31.10.2018**
(21) Anmeldenummer: 12813741.1
(22) Anmeldetag: 15.11.2012
(51) Int. Cl.: B23K 35/30, C22C 38/14, C22C 38/58, B22D 11/06, B23K 9/00, B23K 35/02, C21D 8/02, B23K 101/34

(54) **SCHWEISSZUSATZ ZUM LICHTBOGEN- UND LASERSTRAHLSCHWEISSEN VON MISCHVERBINDUNGEN AUS AUSTENITISCHEM UND FERRITISCHEM STAHL**
WELDING ADDITIVE FOR ELECTRIC ARC WELDING AND LASER BEAM WELDING OF MIXED JOINS COMPOSED OF AUSTENITIC AND FERRITIC STEEL
ADDITIF DE SOUDAGE POUR LE SOUDAGE À L'ARC ET LE SOUDAGE AU LASER DE COMPOSÉS MIXTES D'ACIER AUSTÉNITIQUE ET FERRITIQUE

(30) Priorität: 12.12.2011 DE 102011121705
(43) Veröffentlichungstag der Anmeldung: 22.10.2014
(73) Patentinhaber: Salzgitter Flachstahl GmbH, 38239 Salzgitter (DE)
(72) Erfinder: FLÜGGE, Wilko, 38312 Cramme (DE); HÖFEMANN, Matthias, 38300 Wolfenbüttel (DE); SPRINGUB, Bianca, 22767 Hamburg (DE); GEORGEOU, Zacharias, 38440 Wolfsburg (DE)
(74) Vertreter: Meissner, Peter E.
(86) Internationale Anmeldenummer: PCT/DE2012/001133
(87) Internationale Veröffentlichungsnummer: WO 2013/087049

(56) Entgegenhaltungen:
- WO-A1-95/26423
- DE-A1-102006 059 884
- DE-A1-102009 007 470
- DE-C- 924 601
- JP-A- 56 059 597
- JP-A- 2003 220 492

## Beschreibung

Die Erfindung betrifft die Verwendung eines Schweißzusatzdrahtes zum Lichtbogen- und Laserstrahlschweißen von Mischverbindungen aus austenitischem und ferritischem Stahl gemäß dem Oberbegriff des Patentanspruches 1.

Unter dem Begriff Lichtbogenschweißen sind nachfolgend alle Verfahren zusammengefasst, bei denen ein Schweißzusatz zur Herstellung einer Schweißverbindung verwendet wird, wie beispielsweise Metall-Schutzgasschweißen (MSG), Wolframinertgas- und Plasmaschweißen, sowie Hybridschweißverfahren, eine Kombinationen aus Metall-Schutzgas- und Laserstrahlschweißen.

Unter austenitischem Stahl wird im Folgenden insbesondere ein hochmanganhaltiger Stahl mit bis zu 30 Gew.% Mangan verstanden, wie er z. B. aus der DE 102 59 230 A1, der DE 199 00 199 A1 oder der DE 10 2004 061 284 A1 bekannt ist.

Neben Eisen und Mangan als Hauptelemente weisen diese Stähle Kohlenstoff und weitere Elemente wie beispielsweise Al und Si auf. Die aus diesen Stählen erzeugten Flachprodukte besitzen eine hohe Festigkeit und eine hohe Gleichmaßdehnung.

Stähle mit hohen Mangan-Gehalten eigenen sich aufgrund ihrer günstigen Eigenschaften für den Transportfahrzeugbau insbesondere für den Automobilbau und hier insbesondere für Karosserie- oder Fahrwerksteile. Jedoch sind auch andere Einsatzfelder wie beispielsweise im Maschinenbau oder Baubereich denkbar.

Oftmals müssen Schweißverbindungen zwischen dem hochmanganhaltigen austenitischen Stahl und einem ferritischen Stahl mittels Lichtbogen- und/oder Laserstrahlschweißen hergestellt werden für sogenannte Tailored welded blanks, mit denen crash- und gewichtsoptimierte Bauteile hergestellt werden können.
Während die Lichtbogenschweißung artgleicher hochmanganhaltiger Stähle beispielsweise aus der DE 10 2009 007 470 A1 bekannt und Stand der Technik ist, sind für Lichtbogen- oder Laserschweißungen an Mischverbindungen bislang nur Zusatzwerkstoffe auf CrNi-Basis aus den klassischen "schwarz/weiß-Mischverbindungen", also Verbindungen aus austenitischen Cr-Ni-Stählen und ferritischen Stählen, bekannt.

Dabei ist von Nachteil, dass Chrom in der Schweißzone zu Chrom-Karbiden führt, so dass der Kohlenstoff nicht mehr in ausreichender Menge als Legierungselement zur Austenitbildung bei den hochmanganhaltigen Stählen zur Verfügung steht. Das Element Nickel führt grundsätzlich dazu, dass das Schweißgut zwar eine hohe Zähigkeit aber eine nicht ausreichende Festigkeit aufweist.

Da die Eigenschaften der Schweißverbindung mit den bekannten Zusatzwerkstoffen auf CrNi-Basis nicht den Eigenschaften der beteiligten Grundwerkstoffe gerecht werden, soll der erfindungsgemäße Schweißzusatz diese beiden Elemente nicht mehr aufweisen.

Desweiteren entstehen beim Schweißen o. g. Mischverbindungen innerhalb der Schweißzone z. T. grobe nebeneinander liegende austenitische und martensitische, Gefügephasen, die in einer solchen Konstellation unzureichende mechanische Kennwerte aufweisen. Um die mechanischen Eigenschaften zu verbessern, ist es ein weiteres Ziel, die Legierungszusammensetzung des Schweißzusatzes so einzustellen, dass diese beiden Phasen, die hierbei immer entstehen, feinkörnig und fein verteilt nebeneinander vorliegen.

Der Erfindung liegt daher die Aufgabe zugrunde, einen Schweißzusatzdraht zum Lichtbogen-und/oder Laserschweißen von Mischverbindungen aus austenitischem hochmanganhaltigem Stahl und ferritischem Stahl anzugeben, der ohne die Elemente Chrom und Nickel beim Verschweißen ein Schweißgut mit anforderungsgerechten mechanischen Eigenschaften und feinkörnig verteilten Gefügephasen erzielt.
Nach der Lehre der Erfindung wird diese Aufgabe durch die Verwendung eines Schweißzusatzdrahtes mit folgender Legierungszusammensetzung in Gew.% gelöst:

| | |
|---|---|
| C | 0,04 - 1,0 |
| Mn | 7 - 30 |
| Si | ≤6 |
| Al | ≤4 |
| Mo | ≤2 |
| Ti | ≤0,5 |
| Zr | 0,01 - 0,1 |

| | |
|---|---|
| B | 0,001 - 0,01 |
| P | <0,005 |
| S | <0,002 |
| N | <0,008 |

Rest Eisen und unvermeidbare Stahlbegleitelemente zum Lichtbogen-und Laserstrahlschweißen von Mischverbindungen aus austenitischem hochmanganhaltigem und ferritischen Stahl, wobei der hochmanganhaltige Stahl einen Mangan Gehalt von mindestens 7-30Gew. % aufweist.
Der erfindungsgemäße Schweißzusatzdraht weist gegenüber dem bekannten CrNibasierten Zusatzdraht den großen Vorteil auf, dass dieser durch den Verzicht von Chrom und Nickel einerseits deutlich kostengünstiger ist und dass die Eigenschaften der damit hergestellten Schweißverbindungen optimal den Anforderungen an Mischverbindungen aus hochmanganhaltigem austenitischem und ferritischem Stahl angepasst sind.
Insbesondere wird durch die Zugabe von Zirkon und Bor eine bezogen auf die mechanischen Eigenschaften des Schweißgutes optimale Gefügephasenverteilung und Feinkörnigkeit erreicht.
Im Schweißgut einer solchen Verbindung wird mittels des erfindungsgemäßen Schweißzusatzes einerseits ein homogener Übergang zwischen ferritischen und auch martensitischen Gefügebereichen von der Ferritseite hin zu austenitischen Gefügebereichen austenitseitig erreicht und andererseits eine Feinkörnigkeit, die in Kombination eine deutliche Verbesserung der mechanischen Eigenschaften des Schweißgutes bewirken.
Die konkrete Legierungszusammensetzung des Zusatzwerkstoffs, insbesondere im Hinblick auf die Zugabe von C und Mn, wird im Wesentlichen der Zusammensetzung des austenitischen Fügepartners angepasst, wobei auch entsprechend den in den Ansprüchen 2 und 3 im Hinblick auf Kosten und Schweißguteigenschaften genannten vorteilhaften Legierungszusammensetzungen die Zugabe von Zr und B wesentlich ist, um die geforderten mechanischen Eigenschaften der Schweißverbindung zu erreichen.
Die Elemente Al, Si, Mo und Ti sind nicht zwingend im Zusatzwerkstoff erforderlich aber als Begleitelemente oftmals nicht vermeidbar und sollten, um Herstellkosten und Schweißguteigenschaften nicht nachteilig zu beeinflussen, in den vorgegebenen Grenzen gehalten werden. Zugaben von Ti und Mo in den vorgegebenen Grenzen können sich zudem positiv auf die Gefügeeigenschaften des Schweißgutes auswirken, da bei geringeren Zugaben von Zr und B weiterhin die angestrebte Feinkörnigkeit der Gefügephasen im Schweißgut erreicht wird.

Der vorgestellte Schweißzusatz in Drahtform ist besonders geeignet für alle möglichen Lichtbogenschweißverfahren, wie z. B. Metallschutzgasschweißen (MSG), Wolframinertgas- und Plasmaschweißen sowie für Laserstrahlschweißen und Laser-Metallschutzgas-Hybridschweißen, bei denen die Schweißverbindung mit Zusatzdraht erzeugt wird.

Der erfindungsgemäße Schweißzusatz ist vorteilhaft auch zur Herstellung von Schweißverbindungen an unbeschichteten oder metallisch überzogenen Werkstoffen geeignet. Die metallischen Überzüge können auf der Basis von Zink und/oder Aluminium und/oder Silizium und/oder Magnesium hergestellt sein.

Mit dem erfindungsgemäßen Zusatzdraht können Nahtformen im Stumpfstoß zum Beispiel zum Bandverbindungsschweißen sowie zur Herstellung von Tailored Blanks mit hoher d. h. in anforderungsgerechter Qualität hergestellt werden. Desweiteren sind Bauteilschweißungen als Kehlnaht sowie I-Naht am Überlappstoß problemlos realisierbar.

Ausgehend von dem aus der DE 10 2004 061 284 bekannten hochmanganhaltigen Basiswerkstoff wurden zunächst Zusatzdrähte mit unterschiedlichen Legierungszusammensetzungen entwickelt und erprobt.

Bei Versuchen hat sich gezeigt, dass zum Erreichen anforderungsgerechter mechanischer Eigenschaften durch eine feine Verteilung nebeneinander angeordneter Gefügephasen von Austenit und Ferrit eine Zugabe von Zirkon und Bor unentbehrlich ist.

Vornehmliches Ziel der vorliegenden Erfindung ist es, Mischverbindungen aus hochmanganhaltigem austenitischem Stahl mit einem konventionellen ferritischen Stahl so herzustellen, dass die Verbindungseigenschaften denjenigen der beteiligten Grundwerkstoffe gerecht werden.

Hierzu wurde bei Versuchen angestrebt, im Schweißgut einer solchen Verbindung einen homogenen Übergang zwischen ferritischen und auch martensitischen Gefügebereichen von der Ferritseite hin zu den austenitseitigen austenitischen Gefügebereichen einzustellen wobei die Gefüge möglichst feinkörnig sein sollten.

Die Versuche wurden durchgeführt an einem unverzinkten HSD®-Stahl in einer Blechdicke von t = 1,50 mm und an einem feuerverzinkten mikrolegierten Feinkornbaustahl der Güte H340LAD ebenfalls in der Blechdicke von t = 1,50 mm.

Die Grundwerkstoffe wiesen folgende chemische Zusammensetzung in Gew.% auf:

| | HSD® (Austenit) | H340LAD (Ferrit) |
|---|---|---|
| C | 0,7 | 0,064 |
| Mn | 15 | 0,652 |
| Si | 2,5 | 0,01 |
| Al | 2,5 | 0.038 |
| Mo | - | 0,003 |
| Ti | - | 0,0085 |
| Nb | - | 0,0477 |
| V | - | 0,003 |
| P | <0,005 | 0,01 |
| S | <0,002 | 0,004 |
| N | <0,008 | 0,0041 |

Für die Versuche wurde das Metallschutzgasschweißen eingesetzt, wobei sich in Vorversuchen folgende Prozessparameter als vorteilhaft herausgestellt haben:

| | |
|---|---|
| Schweißstrom: | 76 - 115 A |
| Spannung: | 17.5 - 19 V |
| Schweißgeschw.: | 0.7 - 1 m/min |
| Drahtzuführgeschw.: | 0.7 - 1.2 m/min |
| Gas: | Corgon 10 (15 l/min) |
| Brennerwinkel β: | 60° |
| Lateralwinkel α: | 13° |
| freie Drahtlänge: | 10 mm |

Ausgehend von den ermittelten Schweißparametern wurden die in Tabelle 1 aufgeführten unterschiedlichen Schweißzusatzwerkstoffe bei den Schweißversuchen eingesetzt. Die Legierungszusammensetzungen der untersuchten Zusatzdrähte 1 - 4 weisen im Gegensatz zum Zusatzdraht 5 keinen Zusatz an Bor und Zirkon auf. Im Rahmen einer Eignungsprüfung wurden Proben für die metallographische Analyse, die quasistatische Zugprüfung, sowie für die dynamische Schwingprüfung im Zeitfestigkeitsbereich hergestellt.

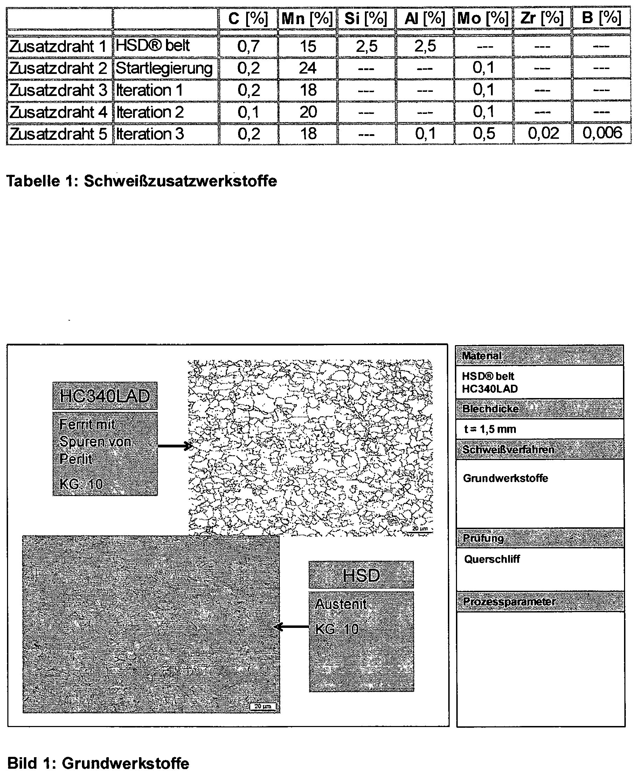

In Bild 1 sind die für die Versuche verwendeten Werkstoffe mit ihren Gefügen dargestellt. Die Gefügeaufnahme im Bild 1 unten links zeigt das Grundgefüge des hochfesten, hochmanganhaltigen austenitischen Stahls der Güte HSD® belt mit einer Zugfestigkeit von bis zu Rₘ=1000 MPa. Es zeigt sich aufgrund des hohen Kohlenstoff- und Mangangehaltes ein austenitisches Grundgefüge (Korngrößenkennzahl 10).

Als ferritischer Fügepartner wurde ein mikrolegierter Feinkornbaustahl der Güte H340LA mit einer Zugfestigkeit bis zu 550 MPa eingesetzt für den in Bild 1 rechts oben das Grundgefüge dargestellt ist. Hier liegt ein feinkörniges ferritisches Gefüge vor (Korngrößenkennzahl 10-11). Deutlich zu erkennen sind fein verteilt die festigkeitssteigernden Karbide und Nitride der Mikrolegierungselemente Ti und Nb.

Der Werkstoff HC340LAD ist im vorliegenden Fall feuerverzinkt mit einer Zinkauflage Z100. Die Anwesenheit von Zink beim Schweißen von Verbindungen mit HSD® wurde bewusst so gewählt, um das Schweißen von bandverzinktem Material im Zusammenspiel mit der Entwicklung eines Schweißzusatzdrahtes zu untersuchen. Der austenitische Grundwerkstoff HSD® belt wurde im unverzinkten Zustand eingesetzt.

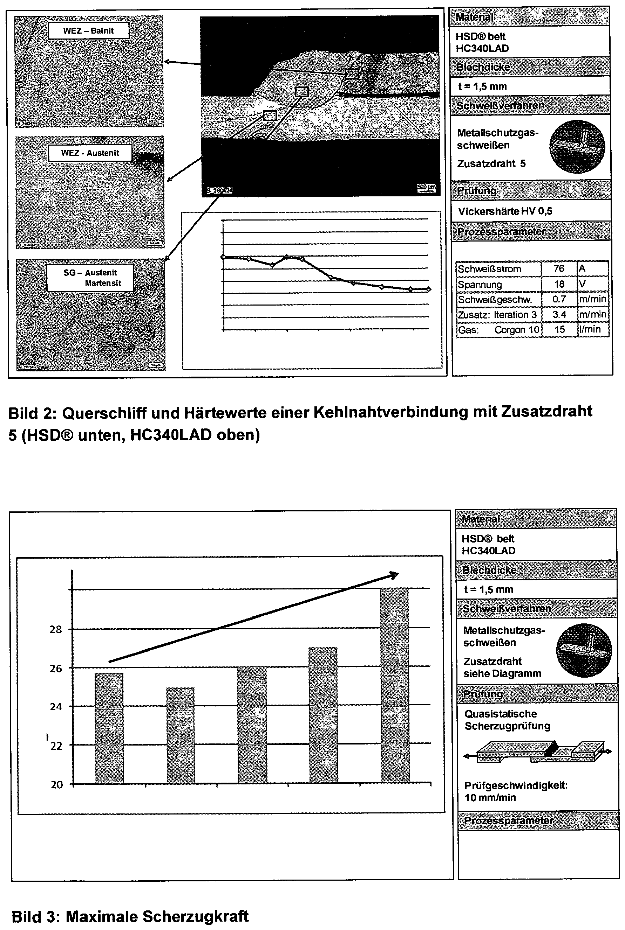

In Bild 2 ist der Querschliff einer Kehlnahtschweißung mit dem erfindungsgemäßen Zusatzdraht 5 dargestellt. In der HSD®-seitigen Wärmeeinflusszone liegt ein austenitisches Gefüge vor mit im Vergleich zum Grundwerkstoff nur unwesentlich vergröbertem Korn.

Beim HC340LAD liegt in der Wärmeeinflusszone ein rein bainitisches Gefüge vor. Im Schweißgut ist hier auch im Vergleich zu den Verbindungen mit den vorangegangenen Legierungskonzepten sehr feinkörnig, und es liegen austenitreiche und martensitreiche Gefügephasen homogen verteilt nebeneinander vor.

Die Härte fällt ausgehend von der Grundhärte des HSD® von 300 HV0,5 in der Wärmeeinflusszone seitens des HSD® erwartungsgemäß leicht ab. Im Schweißgut werden dagegen ähnliche Härtewerte erreicht wie im Grundwerkstoff des HSD®-Stahls.

In der Wärmeeinflusszone seitens des HC340LAD fällt dann die Härte stetig bis auf Grundwerkstoffhärte ab. Auch dieser Härteverlauf besitzt einen relativ stetigen Härteabfall ausgehend von der Grundwerkstoffhärte des HSD® über die Schweißverbindung bis hin zu der Grundwerkstoffhärte des HC340LAD.

In Bild 3 sind die erreichten Maximalkräfte aus dem quasistatischen Scherzugversuch dargestellt. Bei den mit dem Zusatzdraht 1 hergestellten Proben werden Maximalkräfte von mehr als F_{max.} = 25 kN erreicht. Hierbei tritt der Bruch entlang der Schmelzlinie der Naht am Oberblech seitens des HC340LAD ein. Bei den mit Zusatzdraht 2 hergestellten Verbindungen werden im Vergleich zu den mit dem HSD-Draht hergestellten Verbindungen etwas geringere Maximalkräfte ermittelt, wobei hierbei auch einzelne Proben im unbeeinflussten Grundwerkstoff des HC340LAD versagten. Bei den Verbindungen, die mit dem Zusatzdraht 3 hergestellt wurden, werden wiederum Maximalkräfte von mehr als Fmax. = 25 kN gemessen. Die Bruchlage ist hier bei allen Proben im unbeeinflussten Grundwerkstoff des HC340LAD zu beobachten. Im Vergleich dazu werden bei den Verbindungen mit den Zusatzdrähten 4 und 5 höhere Maximalkräfte erreicht (Zusatzdraht 4, Fₘₐₓ = 27 kN, Zusatzdraht 5, Fₘₐₓ = 30 kN) wobei die Bruchlagen bei den meisten Proben entlang der Schmelzlinie der Naht am Oberblech des HC340LAD vorliegen.

Die Untersuchungen zur Verifizierung beinhalten im Wesentlichen Untersuchungen zum Tragverhalten unter dynamisch schwingender Last an der standardisierten H-Proben-Form. Die hierbei ermittelte Wöhlerlinie (kraftgeregelt) der metallschutzgasgeschweißten Mischverbindungen liegt auf hohem Niveau. Sogenannte Durchläufer bei einer ertragenen Lastspielzeit von 2 Mio. Lastwechseln wurden bei einem Lasthorizont von 40 kN erreicht. Die Steigung der Wöhlerlinie stellt mit einem k-Wert nahe k = 5 einen Wert dar, welcher ein hohes Tragverhalten unter dynamisch schwingender Last wiederspiegelt.

Die Untersuchungsergebnisse zeigen auf, dass mit der erfindungsgemäßen Legierungszusammensetzung des Schweißzusatzwerkstoffes die geforderten Eigenschaften der Schweißverbindung sicher erreicht werden können.

## Patentansprüche

1. Verwendung einer Stahllegierung für einen Schweißzusatzdraht, bestehend aus den Legierungselementen in Gew.%:
| | |
|---|---|
| C | 0,04 - 1,0 |
| Mn | 7 - 30 |
| Si | ≤ 6 |
| Al | ≤ 4 |
| Mo | ≤ 2 |
| Ti | ≤ 0,5 |
| Zr | 0,01 - 0,1 |
| B | 0.001 - 0,01 |
| P | < 0,005 |
| S | < 0,002 |
| N | < 0,008, |
Rest Eisen und unvermeidbare Stahlbegleitelementen
zum Lichtbogen- und Laserstrahlschweißen von Mischverbindungen aus austenitischem hochmanganhaltigem und ferritischem Stahl, wobei der hochmanganhaltige Stahl einen Mangan Gehalt von mindestens 7-30 Gew.% aufweist.

2. Verwendung eines Schweißzusatz nach Anspruch 1,
mit folgender Legierungszusammensetzung in Gew.%:
| | |
|---|---|
| C | 0,1 - 0,7 |
| Mn | 15 - 26 |
| Si | ≤ 2,5 |
| Al | ≤ 2,5 |
| Mo | ≤ 1,0 |
| Ti | ≤ 0,1 |
| Zr | 0,01 - 0,08 |
| B | 0,001 - 0,008 |
| P | < 0,005 |
| S | < 0,002 |
| N | < 0,008, Rest Eisen und unvermeidbare Stahlbegleitelemente |

3. Verwendung eines Schweißzusatz nach Anspruch 1,
mit folgender Legierungszusammensetzung in Gew.%:
| | |
|---|---|
| C | 0,1 - 0,3 |
| Mn | 18 - 20 |
| Si | ≤ 1,0 |
| Al | ≤ 0,5 |
| Mo | ≤ 1,0 |
| Ti | ≤ 0,1 |
| Zr | 0,01 - 0,04 |
| B | 0,004 - 0,006 |
| P | < 0,005 |
| S | < 0,002 |
| N | < 0,008, Rest Eisen und unvermeidbare Stahlbegleitelemente. |

4. Verwendung eines Schweißzusatzes nach einem der Ansprüche 1 bis 3 zur Herstellung von Schweißverbindungen an unbeschichteten oder beschichteten Werkstoffen.

5. Verwendung eines Schweißzusatzes nach Anspruch 4 für Werkstoffe mit einem metallischen Überzug.

6. Verwendung eines Schweißzusatzes nach Anspruch 5 für Werkstoffe mit einem metallischen Überzug auf der Basis von Zink und/oder Aluminium und/oder Silizium und/oder Magnesium.

## Claims

1. Use of a steel alloy for a filler-metal wire, consisting of the following alloying elements in % by weight:
| | |
|---|---|
| C | 0,04 - 1.0 |
| Mn | 7 - 30 |
| Si | ≤ 6 |
| Al | ≤ 4 |
| Mo | ≤ 2 |
| Ti | ≤ 0.5 |
| Zr | 0.01 - 0.1 |
| B | 0.001 - 0.01 |
| P | < 0.005 |
| S | < 0.002 |
| N | < 0.008, |
remainder iron and unavoidable steel accompanying elements for arc and laser-beam welding of mixed compounds of austenitic high-manganese-content and ferritic steel, wherein the high-manganese-content steel has a manganese content of at least 7 - 30% by weight.

2. Use of a filler metal according to Claim 1,
having the following alloy composition in % by weight:
| | |
|---|---|
| C | 0.1 - 0.7 |
| Mn | 15 - 26 |
| Si | ≤ 2.5 |
| Al | ≤ 2.5 |
| Mo | ≤ 1.0 |
| Ti | ≤ 0.1 |
| Zr | 0.01 - 0.08 |
| B | 0.001 - 0.008 |
| P | < 0.005 |
| S | < 0.002 |
| N | < 0.008, remainder iron and unavoidable steel accompanying elements. |

3. Use of a filler metal according to Claim 1, having the following alloy composition in % by weight:
| | |
|---|---|
| C | 0.1 - 0.3 |
| Mn | 18 - 20 |
| Si | ≤ 1.0 |
| Al | ≤ 0.5 |
| Mo | ≤ 1.0 |
| Ti | ≤ 0.1 |
| Zr | 0.01 - 0,04 |
| B | 0.004 - 0.006 |
| P | < 0.005 |
| S | < 0.002 |
| N | < 0.008, remainder iron and unavoidable steel accompanying elements. |

4. Use of a filler metal according to one of Claims 1 to 3 for the production of welded joints on uncoated or coated materials.

5. Use of a filler metal according to Claim 4 for materials having a metallic coating.

6. Use of a filler metal according to Claim 5 for materials having a metallic coating on the basis of zinc and/or aluminium and/or silicon and/or magnesium.

## Revendications

1. Utilisation d'un alliage d'acier pour un fil d'apport de soudage, constitué des éléments d'alliage en pourcentage pondéral :
| | |
|---|---|
| C | 0,04 - 1,0 |
| Mn | 7 - 30 |
| Si | ≤ 6 |
| Al | ≤ 4 |
| Mo | ≤ 2 |
| Ti | ≤ 0,5 |
| Zr | 0,01 - 0,1 |
| B | 0,001 - 0,01 |
| P | < 0,005 |
| S | < 0,002 |
| N | < 0,008, |
pour le reste, du fer et des éléments d'accompagnement inévitables de l'acier,
en vue du soudage à l'arc électrique ou au faisceau laser de mélanges d'acier austénitique à haute teneur en manganèse et d'acier ferritique, l'acier à haute teneur en manganèse présentant une teneur en manganèse d'au moins 7 à 30 % en poids.

2. Utilisation d'un apport de soudage selon la revendication 1, avec la composition d'alliage suivante en pourcentage pondéral :
| | |
|---|---|
| C | 0,1 - 0,7 |
| Mn | 15 - 26 |
| Si | ≤ 2,5 |
| Al | ≤ 2,5 |
| Mo | ≤ 1,0 |
| Ti | ≤ 0,1 |
| Zr | 0,01 - 0,08 |
| B | 0,001 - 0,008 |
| P | < 0,005 |
| S | < 0,002 |
| N | < 0,008, |
pour le reste, du fer et des éléments d'accompagnement inévitables de l'acier.

3. Utilisation d'un apport de soudage selon la revendication 1, avec la composition d'alliage suivante en pourcentage pondéral :
| | |
|---|---|
| C | 0.1 - 0,3 |
| Mn | 18 - 20 |
| Si | ≤ 1,0 |
| Al | ≤ 0,5 |
| Mo | ≤ 1,0 |
| Ti | ≤ 0,1 |
| Zr | 0,01 - 0,04 |
| B | 0,004 - 0,006 |
| P | < 0,005 |
| S | < 0,002 |
| N | < 0,008, |
pour le reste, du fer et des éléments d'accompagnement inévitables de l'acier.

4. Utilisation d'un apport de soudage selon l'une quelconque des revendications 1 à 3 pour la fabrication d'assemblages soudés sur des matériaux revêtus ou non revêtus.

5. Utilisation d'un apport de soudage selon la revendication 4 pour des matériaux pourvus d'un revêtement métallique.

6. Utilisation d'un apport de soudage selon la revendication 5 pour des matériaux pourvus d'un revêtement métallique à base de zinc et/ou d'aluminium et/ou de silicium et/ou de magnésium.
